Europäisches Patentamt

(19)  European Patent Office      (11)  Publication number:  **0 252 612**
Office européen des brevets                                **B1**

(12)                    **EUROPEAN PATENT SPECIFICATION**

(45) Date of publication of the patent specification:      (51) Int. Cl.⁵: **F04C 2/10**
26.09.90

(21) Application number: **87305144.5**

(22) Date of filing: **10.06.87**

---

㊹  **Oil pump.**

---

(30) Priority: **07.07.86 GB 8616488**

(43) Date of publication of application:
**13.01.88 Bulletin 88/2**

(45) Publication of the grant of the patent:
**26.09.90 Bulletin 90/39**

(84) Designated Contracting States:
**AT BE CH DE ES FR GB GR IT LI LU NL SE**

(56) References cited:
**EP-A- 0 174 734**
**GB-A- 1 426 223**
**US-A- 2 490 115**
**US-A- 2 509 321**
**US-A- 4 406 599**
**US-A- 4 439 117**
**US-A- 4 445 830**

(73) Proprietor: **CONCENTRIC PUMPS LIMITED,**
**Unit 10 Gravelly Industrial Park Tyburn Road Erdington,**
**Birmingham B24 8HW(GB)**

(72) Inventor: **Child, Robin Edward, Holmby House Eastnor**
**Grove, Leamington Spa Warwickshire CV31 1LD(GB)**

(74) Representative: **Hands, Horace Geoffrey et al, GEORGE**
**FUERY & CO Whitehall Chambers 23 Colmore Row,**
**Birmingham B3 2BL(GB)**

---

## Description

This invention relates to gerotor oil pumps of the kind in which a lobed rotor turns in and with an internally lobed annulus having a larger number of lobes, and the annulus is divided into two axially juxtaposed portions each in a corresponding eccentric having an external bevel gear set driven from a common bevel pinion so that the eccentrics can be simultaneously turned in opposite directions. This varies the displacement of the pump because of the shift in location of the chambers, defined between the inner and outer rotating parts, and the ports which form inlet and outlet passages respectively. Such an oil pump is to be found in EP-A 0 076 033. However, the version illustrated in the said EP document is found unsatisfactory because of the loading applied to the eccentrics which makes them difficult to rotate. In EP-A 0 174 734, the difficulty in turning is overcome by using needle rollers between the eccentrics and the pump body in which they are to turn. But that pump has been found difficult to manufacture economically.

Moreover, the bevel teeth occupy a certain axial dimension on each eccentric, and more particularly the meshing bevel pinion which is located between the two eccentrics has a certain minimum diameter substantially in excess of twice the tooth dimension, which means that the construction can only be used where a particular axial rotor length is exceeded. This happens to exclude many of the possible output ratings for which such pumps would otherwise be useful.

It is also known from US-A 4 439 117 to make a variable displacement vane pump with a generally cylindrical casing housing a rotor carrying vanes which extend axially between the rotor and the opposite end walls of the casing. These end walls are cams, that is they are internally contoured, so that in rotation of the rotor the vanes are displaced by the cam surfaces to slide in and out of the rotor, and the successive pumping chambers, each of which is bounded by two angularly adjacent vanes in the rotational direction and by the rotor and the end wall in the axial direction, vary in volume during the rotation. Variation of displacement is achieved by turning the said end walls in opposite directions relative to the cylindrical part of the casing, and this is done by a system of gear segments on the axially opposite external faces and a shaft parallel with the rotor axis carrying gears engaged with the segments. This solution to the problem of turning two pump parts in opposite directions is not available for use in the gerotor pump designs of the mentioned EPs, because of the essential and unavoidable differences between the vane pump and the gerotor pump, although there is the superficial similarity in that both use pump chambers which processes about the rotary axis and which vary in volume in such movement, and both have parts which require to be turned in opposite directions to vary the volume.

Thus, the vane pump is ported radially to admit and discharge the pumped fluid (oil) whereas the gerotor pump is ported axially. The ported part must remain static. So in the vane pump, the end walls which required to be turned are free to be turned, whereas in the gerotor pump the end walls must remain static and are not free to be turned. The displacement variation is essentially achieved by displacing the maximum chamber position relative to the inlet/outlet ports. If the end walls of the gerotor pump are turned, as in the mentioned US-A 4 439 117 it would take the ports with it because the ports are in those end walls.

Further, the pumping chambers in both kinds of pump must be relatively fluid tight, since otherwise volumetric variation of the pumping chambers result in fluid being forced out of leakage paths instead of being usefully pumped. Applicants have found it necessary to utilise needle roller bearings in order to be able to turn the eccentrics with low power input, and it is not seen how the design features of the U.S. patent could be used whilst retaining these bearings without providing unwanted leakage paths.

The objects of the invention is to solve these problems.

According to the invention we provide a variable output gerotor oil pump having a single common rotor extending through two juxtaposted annuli said rotor having n external teeth meshed with n + 1 internal lobes in the respective annuli, each annulus being located in a corresponding eccentric which can be turned in opposite directions by a drive system comprising a drive shaft movable in one direction to displace the respective axes of the annuli in opposite directions with respect to the axis of the rotor, the rotor, annuli and eccentrics being located in a stationary pump body which surrounds the said parts circumferentially and at each axial end, two sets of needle roller bearings each set being located between one of the eccentrics and the body and each eccentric having a portion axially juxtaposed to the bearings and forming part of said drive system, characterised in that the portions bear straight-cut teeth, said shaft has its axis parallel to the rotor, annuli and eccentric axes, and said shaft transmits drive to the eccentrics in the one case by direct drive via a straight-cut gear pinion or and in the other case via an intermediate straight-cut gear pinion or.

Hence, the invention employs straight-cut teeth on the eccentrics and this avoids the necessity to make them – and hence the annuli and rotor of such a length as to accomodate the relatively thick bevel gear between them. This enables a compact axial length to be provided whilst retaining the advantageous bearing system of the mentioned EP and at the same time avoiding unwanted leakage paths by retaining the stationary body encircling the axial ends of the pumping chambers.

One possibility for the drive gear arrangement is for the drive pinion to mesh directly with one eccentric spur pinion and also with the intermediate pinion which is itself meshed with the other eccentric spur pinion, in order to bring about the movement of the two eccentrics in opposite directions. In another possibility, a shaft carries a pair of drive pinions which are axially spaced, one of which meshes directly with one eccentric and the other of which meshes with an intermediate pinion to drive the other eccentric.

Figure 1 is a somewhat diagrammatic elevation of a first embodiment;

Figure 2 is a sectional plan on the line 2–2 of Figure 1;

Figure 3 is a view similar to figure 1 of the second embodiment;

Figure 4 is a sectional plan on the line 4–4 of Figure 3;

Figure 5 is a sectional elevation on the line 5–5 of Figure 3.

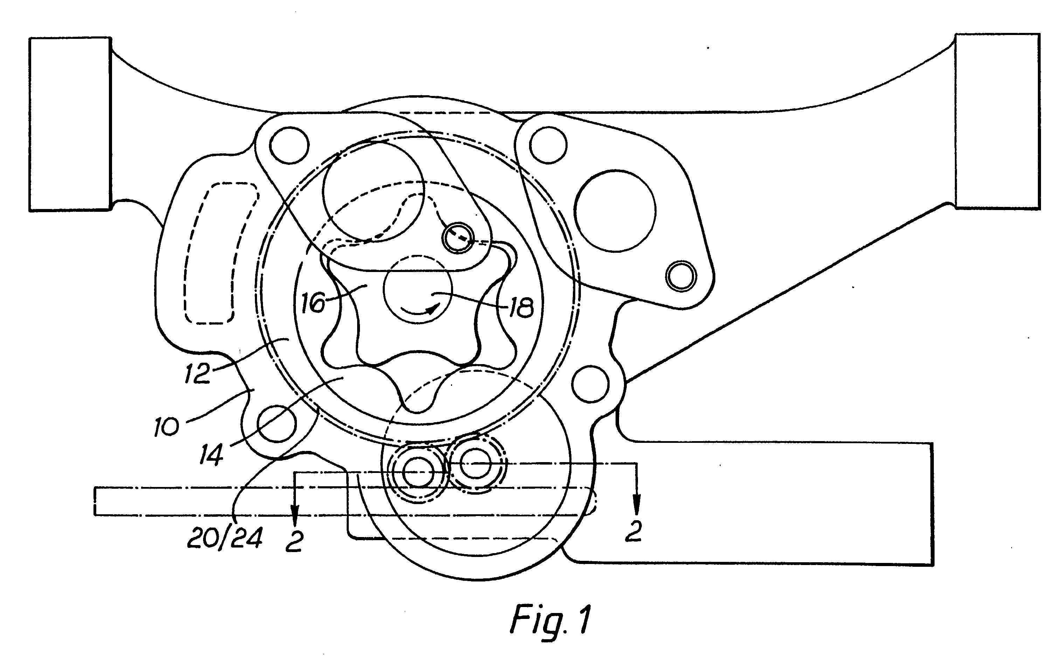

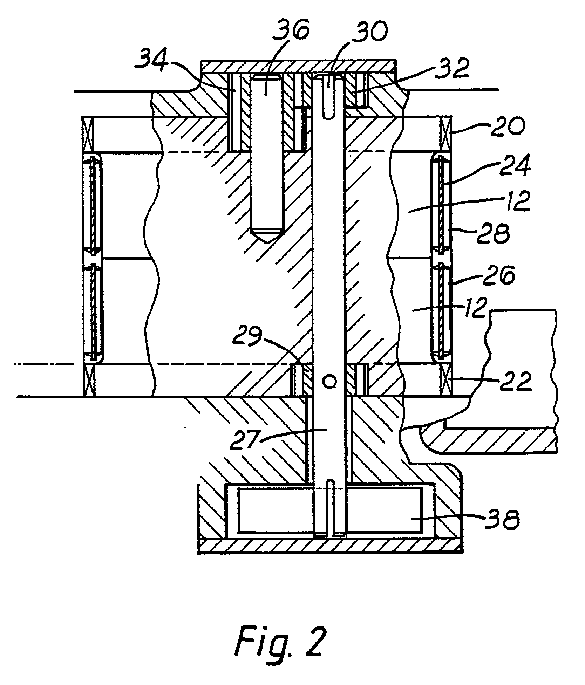

Turning now to the drawings and particularly Figures 1 and 2 thereof, the part 10 forms a casing for the pump and houses the eccentrics 12 which in turn receive the internally toothed annuli 14 surrounding the rotor 16. The rotor 16 has $n$ teeth and the annulus 14 has $n + 1$ teeth. However other numbers are possible. The rotor is driven by shaft 18.

The rotor 16 is a single component but the annulus 14 is a pair of components located axially end to end, and each annulus is located in a corresponding eccentric.

As best seen in Figure 2, the eccentrics are each provided with straight cut spur pinion teeth 20, 22, and between the pinion teeth, is located two axially extending end-to-end independently caged sets of rollers 26, 28. The needle roller bearings are effective between the two eccentric components 12 and the casing 10.

The location of the needle rollers and the teeth is diagrammatically indicated in Figure 1 by the reference 20/24.

The drive arrangements are best seen in Figure 2. Drive shaft 27 is pinned to straight cut pinion 29 meshed with the gear ring 22. It is also keyed at 30 to a further such pinion 32 which is in turn meshed with pinion 34 journalled on shaft 36 and meshed with gear ring 20. It will be appreciated that when the shaft 27 turns, pinions 29 and 34 turn in opposite directions and likewise for the gear rings 20, 22 and hence the two eccentrics 12.

A clock spring 38 or another torsion spring is provided and connected to the shaft 27 for example to return the same to a position in which the eccentricity is at a maximum.

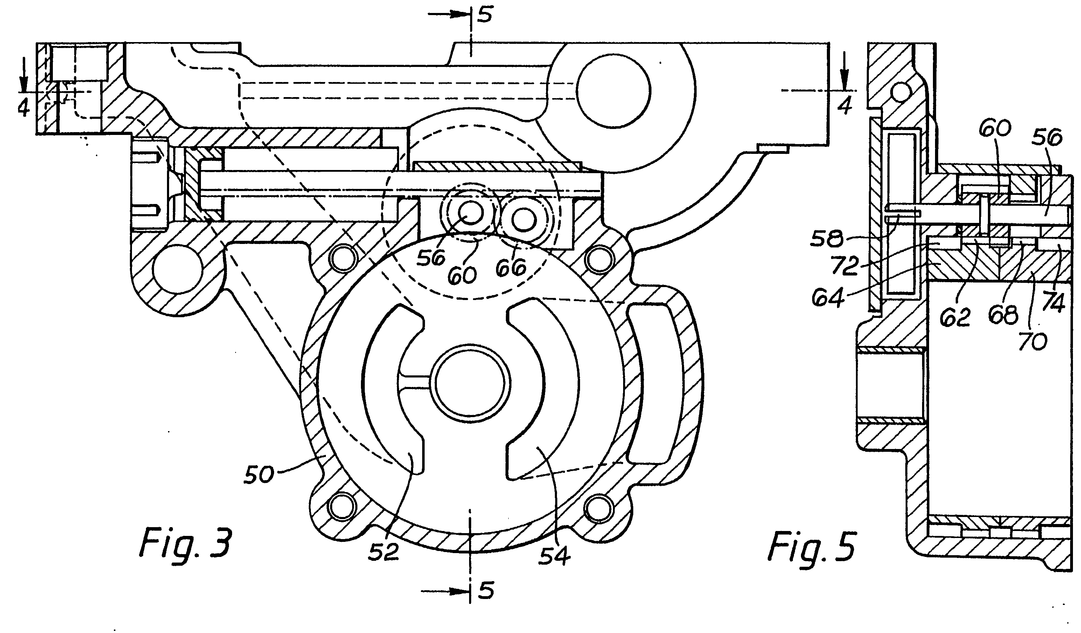

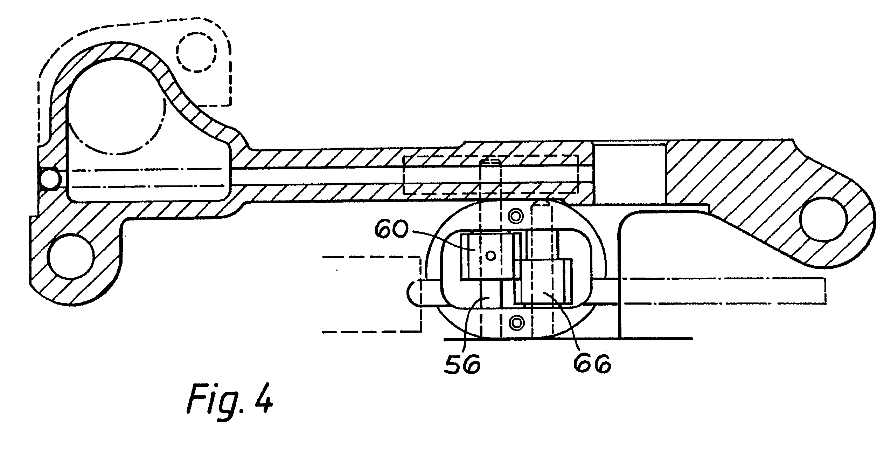

In the arrangement shown in Figure 3, from which the eccentrics, annuli and rotor are omitted for clarity, the casing 50 is provided with the outlet and inlet ports 52, 54 and in this case drive shaft 56 (Figure 5) is connected to the return spring by the slot 58 at one end, and carries pinion 60 meshed with gear ring 62 on the eccentric sheave 64 (only shown in Figure 5) and the same pinion 60 also meshes with a second pinion 66 (Figure 4) on a parallel shaft and that second pinion in turn meshes with a gear ring 68 on the second annuli 70 (Figure 5). In this case the spaces 72, 74 accommodate completely separate caged needle sets to journal the two annuli 64, 70.

## Claims

1. A variable output gerotor oil pump having a single common rotor (16) extending through two juxtaposed annuli (14) said rotor having $n$ external teeth meshed with $n + 1$ internal lobes in the respective annuli, each annulus (14) being located in a corresponding eccentric (12, 12) which can be turned in opposite directions by a drive system comprising a drive shaft (27) movable in one direction to displace the respective axes of the annuli in opposite directions with respect to the axis of the rotor, the rotor, annuli and eccentrics being located in a stationary pump body (10) which surrounds the said parts circumferentially and at each axial end, two sets of needle roller bearings (26, 28) each set being located between one of the eccentrics (12) and the body (10) and each eccentric having a portion (20, 22) axially juxtaposed to the bearings and forming part of said drive system, characterised in that the portions (20, 22) bear straight-cut teeth, said shaft (27) has its axis parallel to the rotor, annuli and eccentric axes, and said shaft (27) transmits drive to the eccentrics in the one rase by direct drive via a straight-cut gear pinion (29) or (60) and in the other case via an intermediate straight-cut gear pinion (34) or (66).

2. A variable output pump as claimed in Claim 1 characterised in that said intermediate pinion (66) is also meshed with the drive pinion (60).

3. A variable output pump as claimed in Claim 1 characterised in that said direct drive pinion 29 is driven by a shaft 27 which drives the intermediate pinion (34).

## Patentansprüche

1. Eine variable Leistung aufweisende Gerotor-Ölpumpe mit einem einzigen gemeinsamen Rotor (16), der sich durch zwei nebeneinanderliegende Kreisringe (14) erstreckt, wobei dieser Rotor n äußere Zähne aufweist, die mit $n + 1$ inneren Nocken in den entsprechenden Kreisringen in Verzahnungseingriff stehen, wobei jeder Kreisring (14) in einem zugehörigen Exzenter (12, 12) angeordnet ist, der in entgegengesetzten Richtungen von einem Antriebssystem gedreht werden kann, das eine Antriebswelle (27) enthält, die in eine Richtung bewegbar ist, um die entsprechenden Achsen der Kreisringe in bezug auf die Rotorachse in entgegengesetzten Richtungen zu verlagern, wobei der Rotor, die Kreisringe und die Exzenter in einem stationären Pumpenkörper (10) angeordnet sind, der die genannten Teile am Umfang und zwei Gruppen von Nadelrollenlagern (26, 28) an jedem axialen Ende umgibt, wobei jede Gruppe zwischen einem Exzenter (13) und dem Körper (10) angeordnet ist und jeder Exzenter einen Abschnitt (20, 22) aufweist, der axial neben den Lagern liegt und einen Teil des genannten Antriebssystems bildet, dadurch gekennzeichnet, daß die Abschnitte (20, 22) geradlinig geschnittene Zähne tragen, die genannte Welle (27) mit ihrer Achse parallel zu den Rotor-, Kreisring- und Exzenterachsen verläuft und diese Welle (27) im einen Fall durch einen Direktantrieb über ein geradlinig geschnittenes Getrieberitzel (29) oder (60) und im anderen Fall über ein zwischengeschaltetes, geradlinig geschnittenes Getrieberitzel (34) oder (66) einen Antrieb auf die Exzenter überträgt.

2. Pumpe mit variabler Leistung gemäß Anspruch 1, dadurch gekennzeichnet, daß das zwischengeschaltete Ritzel (66) ebenfalls mit dem Antriebsritzel (60) in Verzahnungseingriff steht.

3. Pumpe mit variabler Leistung nach Anspruch 1, dadurch gekennzeichnet, daß das Direktantriebsritzel (29) von einer Welle (27) angetrieben wird, die das zwischengeschaltete Ritzel (34) antreibt.

**Revendications**

1. Pompe à huile à gerotor à débit variable comprenant un unique rotor commun (16) traversant deux couronnes juxtaposées (14), ledit rotor comprenant un nombre $\underline{n}$ de dents extérieures engrenées avec un nombre $\underline{n + 1}$ à de lobes internes des couronnes respectives, chaque couronne (14) étant logée à l'intérieur de l'un des deux excentriques correspondants (12, 12) qui peuvent être entraînés en rotation dans des sens opposés par un système d'entraînement comprenant un arbre d'entraînement (27) mobile dans une première direction pour déplacer les axes respectifs des couronnes dans des sens opposés par rapport à l'axe du rotor, le rotor, les couronnes et les excentriques étant logés dans un corps de pompe fixe (10) qui entoure lesdites pièces sur leur pourtour et à chaque extrémité duquel sont montés deux ensembles de paliers à aiguilles (26, 28) dont chacun est logé entre l'un des excentriques (12) et le corps de pompe (10), et chaque excentrique comportant une partie (20, 22) juxtaposée dans la direction axiale avec les paliers et faisant partie dudit système d'entraînement, caractérisée par le fait que les parties (20, 22) portent sur des dents rectilignes, que ledit arbre (37) a son axe parallèle au rotor, aux couronnes et aux axes des excentriques, et que l'arbre (37) transmet l'entraînement aux excentriques dans le premier cas par entraînement direct au moyen du pignon à dents rectilignes (29) ou (60), et dans l'autre cas au moyen d'un pignon à dents rectilignes (34) oou (66) intermédiaire.

2. Pompe à débit variable selon la revendication 1, caractérisée par le fait que ledit pignon intermédiaire (66) est également engrené avec le pignon d'entraînement (60).

3. Pompe à débit variable selon la revendication 1, caractérisée par le fait que ledit pignon (29) d'entraînement direct est entraîné par un arbre (27), qui entraîne le pignon intermédiaire (34).

*Fig. 1*

EP 0 252 612 B1

Fig. 2

Fig. 5

Fig. 3

*Fig. 4*

60

56    66

EP 0 252 612 B1